# EUROPÄISCHE PATENTSCHRIFT

(11) **EP 3 661 799 B1**
(45) Veröffentlichungstag und Bekanntmachung des Hinweises auf die Patenterteilung: **22.06.2022**
(21) Anmeldenummer: 18745534.0
(22) Anmeldetag: 18.07.2018
(51) Int. Cl.: B60L 7/10, B60K 7/00, B60T 1/10, B62D 59/04, B60T 8/17, B60T 8/24, B60L 7/26, B60L 15/20, B60L 50/50, B60L 7/18, B60K 1/00, B60K 1/02, B60K 1/04, B60L 58/10, B60T 8/18, B60T 8/34, B60T 8/48, B60T 13/58, F16D 61/00

(54) **EINSTELLVORRICHTUNG FÜR EIN ELEKTRISCH BETRIEBENES NUTZFAHRZEUG UND VERFAHREN ZUM BETREIBEN DESSELBEN**
ADJUSTING DEVICE FOR AN ELECTRICALLY OPERATED UTILITY VEHICLE AND METHOD FOR THE OPERATION THEREOF
DISPOSITIF DE RÉGLAGE POUR UN VÉHICULE UTILITAIRE À PROPULSION ÉLECTRIQUE ET PROCÉDÉ POUR FAIRE FONCTIONNER CELUI-CI

(30) Priorität: 31.07.2017 DE 102017213199
(43) Veröffentlichungstag der Anmeldung: 10.06.2020
(73) Patentinhaber: KNORR-BREMSE Systeme für Nutzfahrzeuge GmbH, 80809 München (DE)
(72) Erfinder: CSONTOS, Peter, 1119 Budapest (HU); VANYI, Denes, 1119 Budapest (HU); BUDAFOKI, Richard, 9026 Györ (HU); NÓGRÁDI, Zoltán, 2623 Kismaros (HU); HAJOS, Melinda, 2854 Dad (HU)
(86) Internationale Anmeldenummer: PCT/EP2018/069456
(87) Internationale Veröffentlichungsnummer: WO 2019/025183

(56) Entgegenhaltungen:
- EP-A1- 2 394 889
- WO-A1-2017/017169
- US-A- 5 060 959
- US-A1- 2008 174 174

## Beschreibung

Die vorliegende Erfindung bezieht sich auf eine Einstellvorrichtung für ein elektrisch betriebenes Nutzfahrzeug und auf ein Verfahren zum Betreiben desselben. Das elektrisch betriebene Nutzfahrzeug hat eine Vorderachse; mindestens zwei Hinterachsen; mindestens einen Elektromotor zum Antreiben der Hinterachsen; und eine Batterie, die den Elektromotor mit Strom versorgt; wobei die Einstellvorrichtung dazu angepasst ist, ein Niveau zumindest einer der Hinterachsen von der Fahrbahn einzustellen.

Dokument US 2008/174174 A1 offenbart ein Bremsregenerations- und Antriebssystem für einen passiven Anhänger mit Rädern mit Achsen. Dieses umfasst ein Getriebe, das betriebsmäßig mit der Achse zu koppeln ist; einen Motor/Generator, der betriebsmäßig mit dem Getriebe gekoppelt ist; ein Energiespeichersystem zur Speicherung der erfassten Energie und zur Lieferung von Energie; und einen Steuercomputer zur Unterstützung der Verzögerung des passiven Anhängers, indem die Achse veranlasst wird, den Motor/Generator über das Getriebe anzutreiben und dem Energiespeichersystem während der Verzögerung Energie zuzuführen, und zur Unterstützung der Beschleunigung des passiven Anhängers, indem der Motor/Generator veranlasst wird, dem Energiespeichersystem Energie zu entnehmen und die Räder über das Getriebe und die Achse während der Beschleunigung anzutreiben.

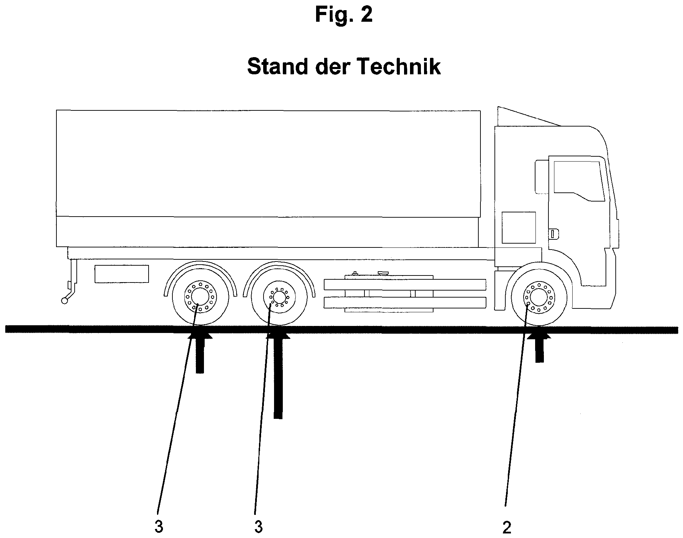

Dokument US5060959 A offenbart eine elektrisch angetriebene Aufhängung für ein Fahrzeug, die folgendes umfasst: Eine Straßenrad- und Reifenbaugruppe und eine elektrisch angetriebene Aufhängungseinheit, deren eines Ende an der Straßenrad- und Reifenbaugruppe und deren anderes Ende am Fahrgestell des Fahrzeugs befestigt ist. Die Aufhängungseinheit umfasst einen Elektromotor zum Positionieren des Straßenrads in Bezug auf das Fahrgestell und eine Steuerung zum Betreiben des Elektromotors zur Steuerung der vertikalen Bewegung der Rad- und Reifenbaugruppe in Bezug auf das Fahrgestell des Fahrzeugs. Der Elektromotor kann entweder einen linearen oder rotierenden Elektromotor umfassen, der entweder allein oder parallel zu einer statischen Lastaufnahmevorrichtung, wie z.B. einer Flüssigkeit oder einer Schraubenfeder, wirkt. **Fig. 2** zeigt ein Nutzfahrzeug aus dem Stand der Technik mit einer Vorderachse 2 und zwei paarweise angeordneten Hinterachsen 3. Zwischen den Hinterachsen 3 ist eine Lastverteilung möglich. Üblicherweise werden drei Arten an Lastverteilungen angewendet. Die erste Lastverteilungsart verwendet eine feste Lastverteilung, so dass zum Beispiel eine der Hinterachsen 3 stets eine angetriebene Achse ist, während die andere Hinterachse 3 stets eine geschleppte Achse ist. Die zweite Lastverteilungsart ist variabel, wobei jene Achse als Antriebsachse dient, auf der die größere Last aufliegt. Die dritte Lastverteilungsart ist temporär variabel, wobei eine Achse in einer bestimmten Zeitperiode überlastet wird, um die Traktion zu unterstützen. In der Fig. 2 sind die unterschiedlichen Lasten durch unterschiedlich lange Pfeile angegeben.

Die Lastverteilung erfolgt durch ein Niveauregulierungssystem, welches ein Niveau einer der Hinterachsen zur Fahrbahn einstellt. Das Niveau und die Last sind verschiedene Parameter. Das Niveau kann kontinuierlich so eingestellt werden, dass die Last auf beiden Hinterachsen 3 über einen bestimmten Zeitraum im Wesentlichen gleich ist. Das Niveauregulierungssystem legt die aufliegende Last gemäß bestimmten Parametern oder einer EoL-Einstellung (End-of-Line) fest. Die aufliegende Last wird solange beibehalten, bis der Fahrer oder ein ASR-System (Anti-Schlupf-Regelung) diese ändert, zum Beispiel zum Unterstützen der Traktion. Das
Niveauregulierungssystem kann die auf die jeweilige Hinterachse aufliegende Last jeweils zwischen 0% und 100% der Gesamtlast einstellen.

Es ist die Aufgabe der vorliegenden Erfindung, eine Niveauregulierung der Hinterachsen bei einem elektrisch betriebenen Nutzfahrzeug zu implementieren. Diese Aufgabe wird durch die Einstellvorrichtung für ein elektrisch betriebenes Nutzfahrzeug mit den Merkmalen des Anspruchs 1 und durch das Verfahren zum Betreiben des elektrisch betriebenen Nutzfahrzeugs mit den Merkmalen des Anspruchs 5 gelöst. Vorteilhafte Weiterbildungen der vorliegenden Erfindung sind in den abhängigen Ansprüchen definiert.

Die Einstellvorrichtung ist gemäß der vorliegenden Erfindung dazu angepasst, einen Rekuperationsbetrieb zu erkennen, in dem der Elektromotor als Generator arbeitet und von den beiden Hinterachsen angetrieben wird, um die Batterie aufzuladen, und das Niveau und eine Last der zumindest einen einstellbaren Hinterachse so einzustellen, dass die Rekuperation optimiert ist. In vorteilhafter Weise werden an beiden Hinterachsen ausreichende Rollwiderstände der Reifen so eingestellt, dass die Rekuperation mit beiden Hinterachsen optimiert wird. Vorzugsweise kann auf beide Hinterachsen im Wesentlichen jeweils die gleiche Last aufliegen. Die vorliegende Erfindung ist besonders vorteilhaft, wenn das Nutzfahrzeug mehrere kleinere Elektromotoren aufweist, die jeweils an einer Achse angebracht sind. Durch die vorliegende Erfindung können alle Elektromotoren optimal an der Rekuperation beteiligt werden.

Vorzugsweise hat die Einstellvorrichtung des Weiteren einen Gefällesensor, und sie ist dazu angepasst, den Rekuperationsbetrieb zu erkennen, wenn der Gefällesensor eine Abwärtsfahrt des Nutzfahrzeugs erfasst. Weiter bevorzugt ist die Einstellvorrichtung dazu angepasst, den Rekuperationsbetrieb zu erkennen, wenn die folgenden Bedingungen erfüllt sind: a) ein vom Gefällesensor erfasstes Gefälle der Fahrbahn ist gleich oder größer als ein erster vorbestimmter Wert; b) ein Beschleunigungspedal des Nutzfahrzeugs ist nicht betätigt; und c) die Bedingungen a) und b) dauern eine vorbestimmte Zeit oder länger an. Damit wird der Rekuperationsbetrieb in vorteilhafter Weise zuverlässig erkannt. Darüber hinaus wird ein überflüssiges Umschalten durch die Einstellvorrichtung vermieden, insbesondere an kurzen Gefällestrecken.

Die vorliegende Erfindung umfasst auch ein Verfahren zum Betreiben eines elektrisch betriebenen Nutzfahrzeugs, das eine Vorderachse, mindestens zwei Hinterachsen, eine Einstellvorrichtung, die ein Niveau zumindest einer der Hinterachsen von der Fahrbahn einstellt, mindestens einen Elektromotor zum Antreiben der Hinterachsen, und eine Batterie aufweist, die den Elektromotor mit Strom versorgt. Im erfindungsgemäßen Verfahren wird das Niveau der zumindest einen einstellbaren Hinterachse derart eingestellt, dass ein Rekuperationsbetrieb optimiert wird, in dem der Elektromotor als Generator arbeitet und von den Hinterachsen angetrieben wird, um die Batterie aufzuladen. In vorteilhafter Weise werden an beiden Hinterachsen ausreichende Rollwiderstände der Reifen eingestellt, so dass die Rekuperation mit beiden Hinterachsen optimiert wird. Vorzugsweise liegt auf beide Hinterachsen im Wesentlichen jeweils die gleiche Last auf.

Vorzugsweise sind die Hinterachsen luftgefederte Achsen, und die auf die Hinterachsen aufliegenden Lasten werden durch einen Drucksensor erfasst, der einen Druck in einem Luftfederbalg der Hinterachsen erfasst. Die erfassten Drücke werden zu der Einstellvorrichtung rückgeführt. Damit werden die Lasten auf die Hinterachsen mit geringem Aufwand genau eingestellt.

Nachfolgend wird anhand der beigefügten Zeichnungen ein Ausführungsbeispiel der vorliegenden Erfindung beschrieben. Es zeigen:
- Fig. 1: ein Nutzfahrzeug sowie ein Verfahren zum Betreiben des Nutzfahrzeugs gemäß einem Ausführungsbeispiel der vorliegenden Erfindung; und
- Fig. 2: ein Nutzfahrzeug aus dem Stand der Technik

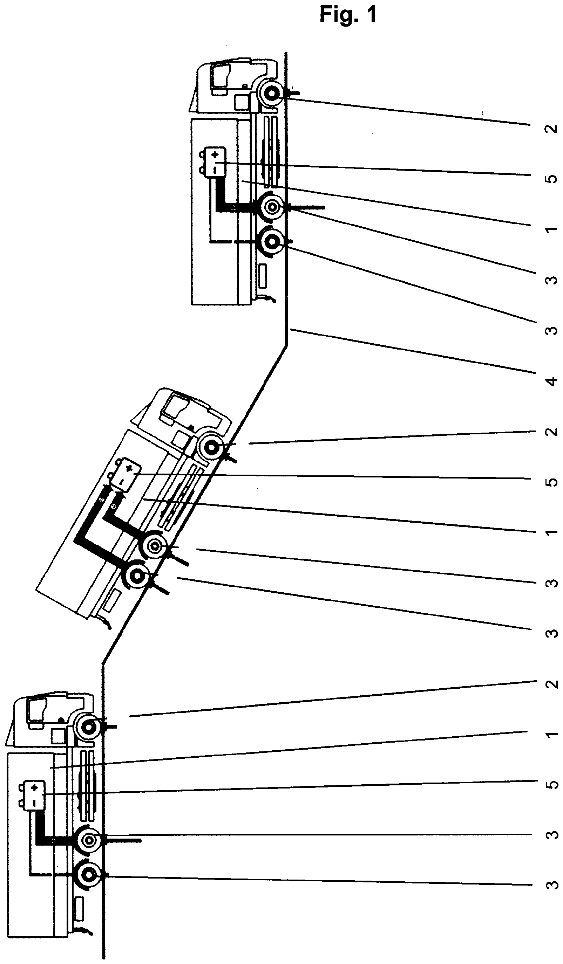

Die **Fig. 1** zeigt in drei zeitlich aufeinanderfolgenden Ansichten ein Nutzfahrzeug sowie ein Verfahren zum Betreiben des Nutzfahrzeugs 1 gemäß einem Ausführungsbeispiel der vorliegenden Erfindung.

Das elektrisch betriebene Nutzfahrzeug 1 hat eine Vorderachse 2; zwei Hinterachsen 3; eine Einstellvorrichtung (nicht gezeigt), die ein Niveau zumindest einer der Hinterachsen 3 (zum Beispiel der hinteren Hinterachse 3) von der Fahrbahn 4 einstellt; Elektromotoren zum Antreiben der Hinterachsen 3; und eine Batterie 5, die die Elektromotoren mit Strom versorgt. Im dargestellten Ausführungsbeispiel sind mehrere Elektromotoren vorgesehen, die jeweils an den Achsen 2, 3 angebracht sind. Die beiden Hinterachsen 3 sind paarweise angeordnet, so dass im Wesentlichen die gleiche Last auf ihnen aufliegt, wenn sie auf dasselbe Niveau von der Fahrbahn 4 eingestellt sind.

Die linke Ansicht der Fig. 1 zeigt einen normalen Betrieb auf einer ebenen Fahrbahn 4. In diesem Fall dient eine der beiden Hinterachsen 3, vorliegend die vordere Hinterachse 3, als Hauptantriebsachse. Die andere Hinterachse 3, vorliegend die hintere Hinterachse 3, dient als Nebenantriebsachse. Diese Konfiguration wird durch die Einstellvorrichtung (nicht gezeigt) bewirkt, indem das Niveau der hinteren Hinterachse 3 von der Fahrbahn 4 im Vergleich mit dem Niveau der vorderen Hinterachse 3 von der Fahrbahn 4 höher ist. Wenn die hintere Hinterachse 3 vollständig von der Fahrbahn 4 angehoben ist, dient sie als Leerachse. In den Ansichten der Fig. 1 sind die unterschiedlichen Lasten jeweils durch unterschiedlich lange Pfeile angegeben.

Die mittlere Ansicht der Fig. 1 zeigt einen Rekuperationsbetrieb auf einem Gefälle. Im Rekuperationsbetrieb arbeitet der Elektromotor als Generator und wird von den Hinterachsen 3 angetrieben, um die Batterie 5 aufzuladen. Dabei stellt die Einstellvorrichtung das Niveau und die Last der einstellbaren Hinterachse 3 so ein, dass die Rekuperation optimiert wird. Zum Beispiel kann die Last jener Hinterachse 3, die bislang schwächer belastet war, vergrößert werden, wodurch gleichzeitig die Last jener Hinterachse 3, die bislang stärker belastet war, verkleinert wird. Damit wird durch die Einstellvorrichtung ein Lastverhältnis der Hinterachsen 3 so eingestellt, dass die Rekuperation optimiert ist. Vorzugsweise kann die Einstellvorrichtung das Niveau und die Last der einstellbaren Hinterachse 3 so einstellen, dass auf beide Hinterachsen 3 im Wesentlichen jeweils die gleiche Last aufliegt. Dadurch wirken auf beide Hinterachsen 3 im Wesentlichen die gleichen Rollwiderstände der Reifen, so dass nicht nur eine Hinterachse 3, sondern beide Hinterachsen 3 die Rekuperation unterstützen. Die vorliegende Erfindung ist besonders vorteilhaft, wenn das Nutzfahrzeug 1 mehrere kleinere Elektromotoren aufweist, die jeweils an einer Achse angebracht sind. Durch die vorliegende Erfindung können alle Elektromotoren optimal an der Rekuperation beteiligt werden.

Die rechte Ansicht der Fig. 1 zeigt wieder den normalen Betrieb auf einer ebenen Fahrbahn 4 nach dem Rekuperationsbetrieb auf dem Gefälle. Hierbei stellt die Einstellvorrichtung das Niveau der einstellbaren Hinterachse 3 derart ein, dass auf beiden Hinterachsen 3 unterschiedliche Lasten aufliegen. In diesem Fall kann eine der beiden Hinterachsen 3, vorliegend wieder die vordere Hinterachse 3, als Hauptantriebsachse dienen. Die andere Hinterachse 3, vorliegend wieder die hintere Hinterachse 3, kann als Nebenantriebsachse bzw. als Leerachse dienen.

Im dargestellten Ausführungsbeispiel kann die Einstellvorrichtung den Rekuperationsbetrieb erkennen, wenn ein Gefällesensor (nicht gezeigt) eine Abwärtsfahrt des Nutzfahrzeugs 1 wie in der mittleren Ansicht der Fig. 1 erfasst. Insbesondere kann die Einstellvorrichtung den Rekuperationsbetrieb erkennen, wenn die folgenden Bedingungen erfüllt sind: a) ein vom Gefällesensor erfasstes Gefälle der Fahrbahn 4 ist gleich oder größer als ein erster vorbestimmter Wert; b) ein Beschleunigungspedal (nicht gezeigt) des Nutzfahrzeugs 1 ist nicht betätigt; und c) die Bedingungen a) und b) dauern eine vorbestimmte Zeit oder länger an. Damit wird der Rekuperationsbetrieb in vorteilhafter Weise zuverlässig erkannt. Darüber hinaus wird ein überflüssiges Umschalten durch die Einstellvorrichtung vermieden, insbesondere an kurzen Gefällstrecken.

Die Einstellvorrichtung kann alternativ den Rekuperationsbetrieb passiv erkennen, indem sie von einer externen Vorrichtung ein Rekuperationssignal aufnimmt. Die externe Vorrichtung führt dann eine aktive Erkennung des Rekuperationsbetriebs durch.

Bei dem Verfahren gemäß dem Ausführungsbeispiel können die Hinterachsen 3 des Nutzfahrzeugs 1 luftgefederte Achsen sein. Die auf die Hinterachsen 3 aufliegenden Lasten können durch einen Drucksensor (nicht gezeigt) erfasst werden, der einen Druck in einem Luftfederbalg (nicht gezeigt) der Hinterachsen 3 erfasst, wobei die erfassten Drücke zu der Einstellvorrichtung rückgeführt werden. Damit werden die Lasten auf die Hinterachsen 3 mit geringem Aufwand genau eingestellt bzw. geregelt.

Die Einstellvorrichtung ist für elektrisch betriebene Nutzfahrzeuge, die vollelektrisch betrieben werden, und für Hybridfahrzeuge geeignet, die neben einem Elektromotor über einen anderen Antrieb wie zum Beispiel einen Verbrennungsmotor verfügen.

### BEZUGSZEICHENLISTE

- 1: Elektrisch betriebenes Nutzfahrzeug
- 2: Vorderachse
- 3: Hinterachse
- 4: Fahrbahn
- 5: Batterie

## Patentansprüche

1. Einstellvorrichtung für ein elektrisch betriebenes Nutzfahrzeug (1),das eine Vorderachse (2); mindestens zwei Hinterachsen (3); mindestens einen Elektromotor zum Antreiben der Hinterachsen (3); und eine Batterie (5) aufweist, die den Elektromotor mit Strom versorgt; wobei
die Einstellvorrichtung dazu angepasst ist, ein Niveau zumindest einer der Hinterachsen (3) von der Fahrbahn (4) einzustellen,
**dadurch gekennzeichnet, dass**
die Einstellvorrichtung dazu angepasst ist, einen Rekuperationsbetrieb zu erkennen, in dem der Elektromotor als Generator arbeitet und von den beiden Hinterachsen (3) angetrieben wird, um die Batterie (5) aufzuladen; und
die Einstellvorrichtung dazu angepasst ist, im erkannten Rekuperationsbetrieb das Niveau und eine Last der zumindest einen einstellbaren Hinterachse (3) so einzustellen, dass die Rekuperation optimiert ist, wobei die Einstellvorrichtung dazu angepasst ist, die Last jener Hinterachse (3), die bislang schwächer belastet war, zu vergrößern, wodurch gleichzeitig die Last jener Hinterachse (3), die bislang stärker belastet war, verkleinert wird.

2. Einstellvorrichtung gemäß Anspruch 1, wobei die Einstellvorrichtung dazu angepasst ist, im erkannten Rekuperationsbetrieb das Niveau der zumindest einen einstellbaren Hinterachse (3) so einzustellen, dass auf beide Hinterachsen (3) im Wesentlichen jeweils die gleiche Last aufliegt.

3. Einstellvorrichtung gemäß Anspruch 1 oder 2, des Weiteren mit einem Gefällesensor, wobei die Einstellvorrichtung dazu angepasst ist, den Rekuperationsbetrieb zu erkennen, wenn der Gefällesensor eine Abwärtsfahrt des Nutzfahrzeugs (1) erfasst.

4. Einstellvorrichtung gemäß Anspruch 3, wobei die Einstellvorrichtung dazu angepasst ist, den Rekuperationsbetrieb zu erkennen, wenn die folgenden Bedingungen erfüllt sind:
a) ein vom Gefällesensor erfasstes Gefälle der Fahrbahn (4) ist gleich oder größer als ein erster vorbestimmter Wert;
b) ein Beschleunigungspedal des Nutzfahrzeugs (1) ist nicht betätigt; und
c) die Bedingungen a) und b) dauern eine vorbestimmte Zeit oder länger an.

5. Verfahren zum Betreiben eines elektrisch betriebenes Nutzfahrzeugs (1), das eine Vorderachse (2), mindestens zwei Hinterachsen (3), eine Einstellvorrichtung, die ein Niveau zumindest einer der Hinterachsen (3) von der Fahrbahn (4) einstellt, mindestens einen Elektromotor zum Antreiben der Hinterachsen (3), und eine Batterie (5) aufweist, die den Elektromotor mit Strom versorgt,
**gekennzeichnet durch**
Einstellen des Niveaus und einer Last der zumindest einen einstellbaren Hinterachse (3) derart, dass ein Rekuperationsbetrieb optimiert wird, in dem der Elektromotor als Generator arbeitet und von den beiden Hinterachsen (3) angetrieben wird, um die Batterie (5) aufzuladen, wobei die Last jener Hinterachse (3), die bislang schwächer belastet war, vergrößert wird, wodurch gleichzeitig die Last jener Hinterachse (3), die bislang stärker belastet war, verkleinert wird.

6. Verfahren zum Betreiben eines elektrisch betriebenen Nutzfahrzeugs (1) gemäß Anspruch 5, wobei das Niveau der einstellbaren Hinterachse (3) derart eingestellt wird, dass auf beide Hinterachsen (3) im Wesentlichen jeweils die gleiche Last aufliegt.

7. Verfahren zum Betreiben eines elektrisch betriebenen Nutzfahrzeugs (1) gemäß Anspruch 5 oder 6, wobei nach Beenden des Rekuperationsbetriebs das Niveau der einstellbaren Hinterachse (3) derart eingestellt wird, dass auf beiden Hinterachsen (3) unterschiedliche Lasten aufliegen.

8. Verfahren zum Betreiben eines elektrisch betriebenen Nutzfahrzeugs (1) gemäß einem der Ansprüche 5 bis 7, wobei die Hinterachsen (3) des Nutzfahrzeugs (1) luftgefederte Achsen sind und die auf die Hinterachsen (3) aufliegenden Lasten jeweils durch einen Drucksensor erfasst werden, der einen Druck in einem Luftfederbalg der Hinterachsen (3) erfasst, wobei die erfassten Drücke zu der Einstellvorrichtung rückgeführt werden.

9. Verfahren zum Betreiben eines elektrisch betriebenen Nutzfahrzeugs (1) gemäß einem der Ansprüche 5 bis 8, wobei die beiden Hinterachsen (3) paarweise angeordnet sind.

10. Elektrisch betriebenes Nutzfahrzeug (1) mit einer Einstellvorrichtung gemäß einem der Ansprüche 1 bis 4.

## Claims

1. An adjusting device for an electrically operated utility vehicle (1) having a front axle (2); at least two rear axles (3); at least one electric motor for driving the rear axles (3); and a battery (5) that supplies the electric motor with electrical power;
the adjusting device being adapted to adjust a level of at least one of the rear axles (3) from the roadway (4),
**characterised in that**
the adjusting device is adapted to identify a recovery mode in which the electric motor functions as a generator and is driven by the two rear axles (3) in order to charge the battery (5); and
the adjusting device is adapted such that, once recovery mode has been identified, it adjusts the level of and a load on the at least one adjustable rear axle (3), thereby optimising recovery, the adjusting device being adapted to increase the load on the rear axle (3) that has hitherto borne the lesser load, thereby simultaneously reducing the load on the rear axle (3) that has hitherto borne the greater load.

2. An adjusting device according to claim 1, the adjusting device being adapted such that, once recovery mode has been identified, it adjusts the level of the at least one adjustable rear axle (3) such that substantially the same load bears on each of the two rear axles (3).

3. An adjusting device according to claim 1 or claim 2, further having a gradient sensor, the adjusting device being adapted to identify recovery mode when the gradient sensor detects downhill travel of the utility vehicle (1).

4. An adjusting device according to claim 3, the adjusting device being adapted to identify recovery mode when the following conditions are fulfilled:
a) a gradient of the roadway (4) detected by the gradient sensor is equal to or greater than a first predetermined value;
b) an accelerator pedal of the utility vehicle (1) is not actuated; and
c) conditions a) and b) last for a predetermined time or longer.

5. A method for operating an electrically operated utility vehicle (1) having a front axle (2); at least two rear axles (3); an adjusting device that adjusts a level of at least one of the rear axles (3) from the roadway (4); at least one electric motor for driving the rear axles (3); and a battery (5) that supplies the electric motor with electrical power,
**characterised by**
the adjustment of the level of and of a load on the at least one adjustable rear axle (3) so as to optimise a recovery mode in which the electric motor functions as a generator and is driven by the two rear axles (3) in order to charge the battery (5), the load on the rear axle (3) that has hitherto borne the lesser load being increased, thereby simultaneously reducing the load on the rear axle (3) that has hitherto borne the greater load.

6. A method for operating an electrically operated utility vehicle (1) according to claim 5, the level of the adjustable rear axle (3) being adjusted such that substantially the same load bears on each of the two rear axles (3).

7. A method for operating an electrically operated utility vehicle (1) according to claim 5 or claim 6, once recovery mode is over the level of the adjustable rear axle (3) being adjusted such that different loads bear on each of the two rear axles (3).

8. A method for operating an electrically operated utility vehicle (1) according to any one of claims 5 to 7, the rear axles (3) of the utility vehicle (1) being air-sprung axles and the loads bearing on the rear axles (3) being detected by a pressure sensor that detects a pressure in an air bellows of the rear axle (3), the pressures detected being fed back to the adjusting device.

9. A method for operating an electrically operated utility vehicle (1) according to any one of claims 5 to 8, the two rear axles (3) being arranged in a pair.

10. An electrically operated utility vehicle (1) having an adjusting device according to any one of claims 1 to 4.

## Revendications

1. Dispositif de réglage d'un véhicule (1) utilitaire à propulsion électrique, qui a un essieu (2) avant ; au moins deux essieux (3) arrière ; au moins un moteur électrique d'entraînement des essieux (3) arrière ; et une batterie (5), qui alimente le moteur électrique en courant ; dans lequel
le dispositif de réglage est adapté pour régler un niveau d'au moins l'un des essieux (3) arrière par rapport à la voie (4) de circulation,
**caractérisé en ce que**
le dispositif de réglage est adapté pour reconnaître un fonctionnement en récupération, dans lequel le moteur électrique fonctionne en génératrice et est entraîné par les deux essieux (3) arrière pour charger la batterie (5) ; et
le dispositif de réglage est adapté pour régler, dans le fonctionnement reconnu en récupération, le niveau et une charge du au moins un essieu (3) arrière réglable, de manière à optimiser la récupération, le dispositif de réglage étant adapté pour augmenter la charge de l'essieu (3) arrière, qui a été chargé plus légèrement jusqu'ici, grâce à quoi en même temps, la charge de l'essieu (3) arrière, qui était chargé plus fortement jusqu'ici est diminuée.

2. Dispositif de réglage suivant la revendication 1, dans lequel le dispositif de réglage est adapté pour régler, dans le fonctionnement reconnu en récupération, le niveau du au moins un essieu (3) arrière réglable, de manière à ce que sensiblement et respectivement la même charge s'applique aux deux essieux (3) arrière.

3. Dispositif de réglage suivant la revendication 1 ou 2, comprenant en outre un capteur de pente, dans lequel le dispositif de réglage est adapté pour reconnaître le fonctionnement en récupération si le capteur de pente détecte une circulation en descente du véhicule (1) utilitaire.

4. Dispositif de réglage suivant la revendication 3, dans lequel le dispositif de réglage est adapté pour reconnaître le fonctionnement en récupération si les conditions suivantes sont satisfaites :
a) une descente détectée par le capteur de descente de la voie (4) de circulation est supérieure ou égale à une première valeur définie à l'avance ;
b) une pédale d'accélération du véhicule (1) utilitaire n'est pas actionnée ; et
c) les conditions a) et b) durent pendant une durée définie à l'avance ou plus longtemps.

5. Procédé pour faire fonctionner un véhicule (1) utilitaire à propulsion électrique, qui a un essieu (2) avant, au moins deux essieux (3) arrière, un dispositif de réglage, qui règle un niveau d'au moins l'un des essieux (3) arrière par rapport à la voie (4) de circulation, au moins un moteur électrique d'entraînement des essieux (3) arrière et une batterie (5), qui alimente le moteur électrique en courant,
**caractérisé par**
le réglage du niveau ou d'une charge du au moins un essieu (3) arrière réglable, de manière à optimiser un fonctionnement en récupération, dans lequel le moteur électrique fonctionne en génératrice et est entraîné par les deux essieux (3) arrière pour charger la batterie (5), dans lequel on augmente la charge de l'essieu (3) arrière, qui était chargé plus légèrement jusqu'ici, grâce à quoi, on diminue en même temps, la charge de l'essieu (3) arrière, qui était chargé plus fortement jusqu'ici.

6. Procédé pour faire fonctionner un véhicule (1) utilitaire à propulsion électrique suivant la revendication 5, dans lequel on règle le niveau de l'essieu (3) arrière réglable, de manière à ce que sensiblement et respectivement la même charge s'applique aux deux essieux (3) arrière.

7. Procédé pour faire fonctionner un véhicule (1) utilitaire à propulsion électrique suivant la revendication 5 ou 6, dans lequel, après la fin du fonctionnement en récupération, on règle le niveau de l'essieu (3) arrière réglable, de manière à ce que des charges différentes s'appliquent aux deux essieux (3) arrière.

8. Procédé pour faire fonctionner un véhicule (1) utilitaire à propulsion électrique suivant l'une des revendications 5 à 7, dans lequel les essieux (3) arrière du véhicule (1) utilitaire sont des essieux à suspension pneumatique et on détecte les charges s'appliquant aux essieux (3) arrière respectivement par un capteur de pression, qui détecte une pression des essieux (3) arrière dans un soufflet à ressort pneumatique, les pressions détectées étant renvoyées au dispositif de réglage.

9. Procédé pour faire fonctionner un véhicule (1) utilitaire à propulsion électrique suivant l'une des revendications 5 à 8, dans lequel les deux essieux (3) sont montés paire par paire.

10. Véhicule (1) utilitaire à propulsion électrique ayant un dispositif de réglage suivant l'une des revendications 1 à 4.
